# FASCICULE DE BREVET EUROPEEN

(11) **EP 2 253 000 B1**
(45) Date de publication et mention de la délivrance du brevet: **29.06.2011**
(21) Numéro de dépôt: 09711778.2
(22) Date de dépôt: 17.02.2009
(51) Int. Cl.: G21F 9/12, G21F 9/16, G21C 19/46

(54) **PROCEDE DE DECONTAMINATION D'UN EFFLUENT LIQUIDE RADIOACTIF EN UN OU PLUSIEURS ELEMENTS CHIMIQUES RADIOACTIFS PAR EXTRACTION SOLIDE-LIQUIDE METTANT EN OEUVRE UNE BOUCLE DE RECYCLAGE**
VERFAHREN ZUR DEKONTAMINIERUNG EINER RADIOAKTIVEN FLÜSSIGEFFLUENZ MIT EINEM ODER MEHREREN CHEMISCHEN ELEMENTEN DURCH FESTSTOFF-FLÜSSIGKEIT-EXTRAKTION MITHILFE EINES RECYCLING-KREISLAUFS
METHOD FOR THE DECONTAMINATION OF A RADIOACTIVE LIQUID EFFLUENT WITH ONE OR MORE RADIOACTIVE CHEMICAL ELEMENTS BY SOLID-LIQUID EXTRACTION USING A RECYCLING LOOP

(30) Priorité: 18.02.2008 FR 0851023
(43) Date de publication de la demande: 24.11.2010
(73) Titulaire: Commissariat à l'Énergie Atomique et aux Énergies Alternatives, 75015 Paris (FR)
(72) Inventeur: PACARY, Vincent, F-30200 Bagnols sur Ceze (FR); BARRE, Yves, F-84100 Uchaux (FR); PLASARI, Edouard, F-54000 Nancy (FR)
(74) Mandataire: Ilgart, Jean-Christophe
(86) Numéro de dépôt international: PCT/EP2009/051862
(87) Numéro de publication internationale: WO 2009/103703

(56) Documents cités:
- EP-A- 0 180 308
- BE-A- 535 584
- DE-A1- 3 744 699
- FR-A- 1 399 711
- FR-A- 2 478 364

## Description

### DOMAINE TECHNIQUE

La présente invention a trait à un procédé de décontamination d'un effluent liquide radioactif comprenant un ou plusieurs éléments chimiques à éliminer, lesdits éléments étant des radionucléides, ledit procédé faisant intervenir une étape d'extraction solide-liquide (ou étape dite de coprécipitation).

Un tel procédé trouve notamment son application dans le retraitement d'effluents liquides radioactifs, chargés notamment en strontium, en ruthénium, américium, plutonium, uranium ou encore césium.

### ÉTAT DE LA TECHNIQUE ANTÉRIEURE

Le traitement de décontamination d'effluents liquides, notamment d'effluents liquides radioactifs, par coprécipitation a été mis au point dans les années 60. Celui-ci consiste à introduire dans l'effluent liquide à décontaminer des particules solides préformées et/ou des réactifs précurseurs desdites particules, lesdits réactifs réagissant *in situ* dans l'effluent liquide à décontaminer pour former lesdites particules. Ces particules sont choisies pour leur capacité à capter et retenir sélectivement le ou lesdits éléments à éliminer. Parmi les particules solides susceptibles de capter et retenir des éléments métalliques, on peut citer :
- les particules de sulfate de baryum aptes à capter et retenir le strontium ;
- les particules d'hydroxydes de fer et de cuivre aptes à capter et retenir le ruthénium et les émetteurs α, tels que l'américium, le plutonium et l'uranium ;
- les particules de ferrocyanures de nickel et de cobalt aptes à capter et retenir sélectivement le césium.

Le traitement de décontamination peut être réalisé selon deux modes :
- un mode discontinu, dans lequel l'on traite uniquement un volume prédéterminé d'effluent liquide à décontaminer introduit dans un réacteur, dans lequel l'on introduit les particules solides aptes à capter et retenir le ou lesdits éléments chimiques à éliminer et/ou les réactifs précurseurs desdites particules ;
- un mode continu, dans lequel l'on introduit dans un réacteur de façon continue, avec un débit constant ou variable, l'effluent à décontaminer, les particules solides aptes à capter et retenir le ou lesdits éléments chimiques à éliminer et/ou les réactifs précurseurs desdites particules, l'ajout des particules et/ou réactifs pouvant être effectué dans une cascade de réacteurs.

Que ce soit pour le mode discontinu ou continu, l'on obtient à l'issue du traitement dans le réacteur, une suspension de particules solides ayant capté les éléments à éliminer initialement présents dans l'effluent liquide. L'issue finale du traitement consiste, ensuite, à réaliser une étape de séparation liquide/solide généralement dans un décanteur. Cette étape peut être facilitée en ajoutant à la suspension un agent coagulant et/ou un agent floculant. La phase solide recueillie à l'issue de cette étape de séparation (appelée à ce stade « boue ») est alors considérée comme un déchet ultime et est conditionnée, généralement dans du bitume ou dans une matrice cimentaire, avant d'être entreposée. Le liquide décontaminé est, quant à lui, rejeté dans l'environnement, si sa composition radiologique et chimique le permet. A défaut, le liquide peut être amené à subir, à nouveau, un traitement ultérieur de décontamination.

Pour les effluents liquides présentant une haute activité ou n'ayant subi qu'une décontamination partielle à l'issue d'un traitement précédent, il peut être utile de soumettre ces effluents à une nouvelle mise en contact avec des particules solides complexantes d'éléments chimiques, ce qui conduit, à l'issue de l'opération de traitement, à une quantité de boue générée multipliée par le nombre de traitements nécessaires et donc, au final, à un important volume d'entreposage. DE -3744699 enseigne un traitement de décontamination avec ultra filtration à l'aide des membranes.

Il existe donc un véritable besoin pour un procédé continu de décontamination d'effluents liquides radioactifs, permettant de limiter la quantité de particules solides à utiliser pour décontaminer un volume d'effluent liquide donné, et ce afin de limiter le volume de boue de décontamination obtenu à l'issue du procédé de décontamination, et ainsi, le volume de confinement des boues obtenues tout en préservant voire améliorer l'efficacité de décontamination.

### EXPOSÉ DE L'INVENTION

Ainsi, l'invention a trait à un procédé continu de décontamination d'un effluent liquide radioactif comprenant un ou plusieurs éléments chimiques radioactifs à éliminer comprenant les étapes suivantes:
- une étape de mise en contact, dans un premier réacteur, dudit effluent liquide avec des particules solides aptes à capter et retenir le ou lesdits éléments chimiques radioactifs à éliminer, moyennant quoi l'on obtient une suspension de particules solides contenant ledit ou lesdits éléments chimiques radioactifs à éliminer ;
- une étape de décantation dans un deuxième réacteur de ladite suspension, moyennant quoi l'on obtient une phase solide comprenant les particules solides contenant ledit ou lesdits éléments chimiques radioactifs à éliminer et une phase liquide appauvrie ou dénuée en ledit ou lesdits éléments chimiques radioactifs à éliminer ;
- une étape de séparation de ladite phase solide et de ladite phase liquide ;
caractérisé en ce qu'une partie de ladite phase solide obtenue à l'issue de l'étape de décantation est réinjectée dans le premier réacteur pour la mise en oeuvre d'une étape de mise en contact telle que définie ci-dessus.

De ce procédé nouvellement mis en oeuvre découle les avantages suivantes :
- pour une quantité d'éléments chimiques radioactifs donnée à éliminer, une amélioration de l'efficacité de la décontamination sans augmentation de la quantité de phase solide générée, du fait de la réutilisation d'une partie de la phase solide pour décontaminer l'effluent liquide ;
- au final, une diminution des déchets solides, du fait de la réutilisation d'une partie de la phase solide pour éliminer les éléments chimiques radioactifs voulues ;
- par voie de conséquence, une amélioration de l'efficacité de décontamination et/ou une concentration des éléments chimiques radioactifs à éliminer dans un volume de déchets solides plus réduit.

On précise que, par procédé continu, on entend classiquement un procédé dans lequel les étapes sont mises en oeuvre sans interruption, à savoir que, à l'instant t, un volume d'effluent liquide subit l'étape de mise en contact tandis qu'un autre volume subit l'étape de décantation et de séparation.

Conformément à l'invention, le procédé comprend une étape de mise en contact dans un premier réacteur, dudit effluent liquide avec des particules solides aptes à capter et retenir le ou lesdits éléments chimiques radioactifs à éliminer, moyennant quoi l'on obtient une suspension de particules solides contenant ledit ou lesdits éléments chimiques radioactifs à éliminer.

Les particules solides aptes à capter et retenir le ou lesdits éléments de l'étape de mise en contact sont, classiquement, conformément au procédé de l'invention, de deux types :
- un partie est issue d'un flux continu dans le premier réacteur de particules non usées (à savoir n'ayant pas subi encore d'étape de mise en contact avec l'effluent liquide) et/ou de réactifs aptes à engendrer par réaction chimique lesdites particules; et
- l'autre partie est issue de l'étape de réinjection susmentionnée.

Du fait que le procédé de décontamination est un procédé continu, le premier réacteur est, classiquement, alimenté, tout au long du déroulement du procédé, par un flux d'effluent liquide à décontaminer et par un flux de particules et/ou de réactifs tels que mentionnés ci-dessus, une partie du flux de particules provenant de l'étape de réinjection.

Le premier réacteur peut comprendre, avantageusement, un dispositif d'agitation permettant d'assurer le mélange des flux entrants et l'homogénéisation du contenu du réacteur. Dans ce cas de figure, l'ensemble constitué par l'effluent liquide et les particules forme une suspension, sans qu'il y ait sédimentation des particules solides dans le premier réacteur.

Du fait que les flux entrants sont continus, il peut y avoir formation d'un trop-plein, auquel cas le procédé pourra comprendre, de façon concomitante à l'étape de mise en contact, une étape d'évacuation du trop-plein, par exemple, par débordement.

Les particules solides aptes à capter et retenir le ou les éléments chimiques radioactifs à extraire de l'effluent liquide seront choisies de façon à capter et retenir le ou les éléments chimiques radioactifs en question. Les éléments chimiques radioactifs peuvent être choisis parmi le strontium, le ruthénium, le césium, des émetteurs α, tels que l'américium, le plutonium et l'uranium, et les mélanges de ceux-ci. Le procédé de décontamination de l'invention peut être un procédé de décontamination d'effluents liquides radioactifs, provenant, par exemple, d'installations nucléaires.

A titre d'exemples, lorsque l'élément chimique est le strontium, les particules solides peuvent être des particules de sulfate de baryum, de carbonate de baryum, de carbonate de calcium, d'hydroxyde de fer, de phosphate de calcium, de phosphate de fer, de dioxyde de manganèse, de dioxyde de titane, de préférence de sulfate de baryum.

Lorsque l'élément chimique est le ruthénium ou un émetteur α, tel que l'américium, le plutonium et l'uranium, les particules solides peuvent être des particules d'hydroxyde de fer et de cuivre.

Lorsque l'élément chimique est le césium, les particules solides peuvent être des particules de ferrocyanures de nickel et de cobalt, de tétraphénylborate et/ou plus généralement des particules présentant une structure zéolithique. De préférence, les particules solides aptes à capter et retenir le césium sont des particules de ferrocyanures de nickel et de cobalt.

Une fois l'étape de mise en contact réalisée, le procédé de l'invention comprend une étape de décantation, cette étape de décantation consistant classiquement à laisser au repos, dans un réacteur du type décanteur, la suspension obtenue lors de l'étape précédente, de façon à obtenir une sédimentation des particules ayant capté et retenu le ou les éléments chimiques à éliminer. Ainsi, à l'issue de cette étape, l'on obtient une phase comprenant lesdites particules dans la partie inférieure du décanteur et une phase liquide surnageante appauvrie voire dénuée du ou desdites éléments chimiques radioactifs à éliminer et par voie de conséquence du ou desdites particules solides.

L'étape de décantation, du fait de ne pas faire intervenir de membrane, présente l'avantage de ne pas engendrer de contamination radioactive de membrane et ainsi, les problèmes découlant d'une telle décontamination. En effet, l'utilisation d'une membrane, notamment d'une membrane organique telle que classiquement utilisée dans le domaine de la séparation solide-liquide, générerait des problèmes de transport et de conditionnement de telles membranes contaminées, notamment en raison d'un dégagement potentiel d'hydrogène lié à la radiolyse de celles-ci par les éléments radioactifs piégés en celles-ci.

D'un point de vue pratique, le second réacteur du type décanteur est alimenté par un flux de sortie du premier réacteur, ce flux de sortie comprenant ladite suspension. La décantation peut être facilitée par une étape d'ajout dans le deuxième réacteur d'un coagulant et/ou floculant.

Du fait que le procédé de l'invention est un procédé continu, la quantité de phase liquide supérieure et de phase solide inférieure serait amenée à augmenter, si aucune disposition d'évacuation n'était prévue.

Ainsi, le procédé de l'invention comprend, une étape de séparation de ladite phase solide et de ladite phase liquide, la phase liquide surnageante étant classiquement évacuée par débordement, tandis que la phase solide est classiquement évacuée par soutirage, généralement, de façon discontinue, une partie de cette phase solide étant réinjectée dans le premier réacteur pour participer de nouveau à l'étape de mise en contact avec un autre volume d'effluent liquide à décontaminer. La phase liquide récupérée appauvrie voire dénuée en éléments chimiques radioactifs retenues par la phase enrichie en particules solides peut être soit rejetée dans l'environnement, si l'examen radiologique le permet, soit soumise à d'autres traitements, si besoin est.

Comme mentionnée précédemment, une partie de la phase solide obtenue après décantation est réinjectée dans le premier réacteur, généralement, sous forme d'un flux acheminant la phase solide du deuxième réacteur vers le premier réacteur (ce flux pouvant être qualifié de «boucle de recyclage »).

Le fonctionnement de cette boucle a pour effet de remettre en contact la phase solide avec l'effluent liquide chargé en élément(s) chimique(s) à éliminer. La phase solide est encore apte à fixer une certaine quantité de ces éléments chimiques, ce qui a, ainsi, pour conséquence, d'augmenter l'activité chimique de ces particules.

Ainsi, du fait du caractère continu du procédé de l'invention, la quantité de particules sortant du premier réacteur et acheminée vers le second réacteur résulte de deux contributions :
- d'une part, celle liée à l'injection des particules préformées et aux réactions chimiques induites par la mise en contact des réactifs, le cas échéant ;
- et d'autre part, celle apportée par la boucle de recyclage.

Il est entendu que la quantité d'éléments chimiques radioactifs retenus dans la phase solide augmente avec la quantité de particules solides dans le premier réacteur. Dans la mesure où l'étape de réinjection des particules solides permet d'augmenter la concentration en particules solides dans le réacteur, le procédé de l'invention permet ainsi de réaliser une décontamination plus poussée des effluents à traiter.

En outre, grâce à l'étape de réinjection, il est possible aussi de réduire la quantité totale de réactifs et/ou de particules solides à introduire au cours du traitement. En dépit de l'introduction moindre des réactifs et/ou des particules solides dans le premier réacteur, l'efficacité de décontamination peut être conservée voire améliorée en ajustant le débit de réintroduction des particules du second réacteur vers le premier réacteur.

La diminution de l'introduction des particules et/ou des réacteurs dans le premier réacteur conduit à une réduction du volume total des déchets solides. L'efficacité étant conservée voire améliorée, l'activité extractive s'en trouve augmentée.

Préalablement à la mise en oeuvre des étapes susmentionnées (étapes de mise en contact, décantation et séparation), le procédé de l'invention peut comprendre avantageusement, une étape de remplissage du premier réacteur d'un volume prédéterminé d'effluent liquide à traiter et d'une quantité prédéterminée de particules solides aptes à capter et retenir le ou lesdits éléments chimiques radioactifs à éliminer et/ou de réactifs tels que définis précédemment et, avantageusement, une étape de remplissage du deuxième réacteur par une suspension comprenant des particules solides aptes à capter et retenir le ou lesdits éléments chimiques radioactifs à éliminer, afin que, lors du premier démarrage de l'étape de mise en contact, l'étape de réinjection puisse avoir lieu à partir de ladite suspension.

Une fois le procédé mis en route, la phase solide réinjectée ultérieurement sera constituée de particules solides ayant déjà subi l'étape de mise en contact.

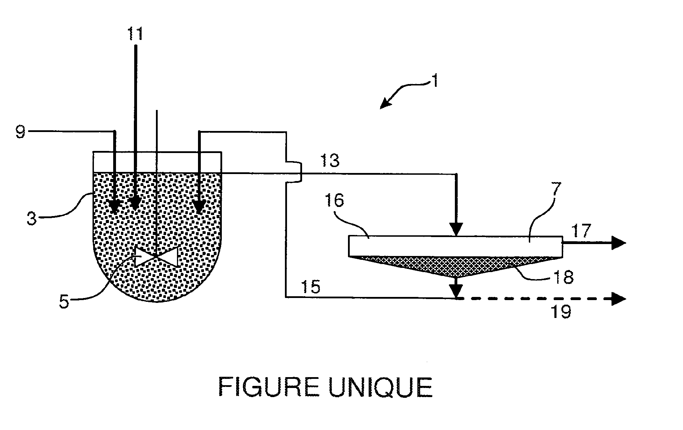

D'autres caractéristiques et avantages de l'invention apparaîtront mieux à la lecture de l'exemple suivant donné, à titre illustratif et non limitatif, en référence à la figure unique annexée.

### BRÈVE DESCRIPTION DES DESSINS

La figure unique représente, sous forme d'un schéma de principe, un exemple d'une installation destinée à permettre la mise en oeuvre du procédé de l'invention.

### EXPOSÉ DÉTAILLÉ DE MODES DE RÉALISATION PARTICULIERS

### EXEMPLE

Cet exemple illustre la mise en oeuvre du procédé de l'invention pour la décontamination d'un effluent liquide contenant du strontium.

Pour la description de cet exemple, on se réfère à la figure unique qui représente, sous la forme d'un schéma de principe, un exemple d'une installation 1 conçue pour la mise en oeuvre du procédé de l'invention dans le cadre d'un procédé industriel de décontamination d'un effluent aqueux, par exemple issu du retraitement d'un combustible nucléaire irradié, comprenant du strontium.

L'installation 1 comprend respectivement :
- un premier réacteur 3, destiné à accueillir l'effluent aqueux à décontaminer et les particules solides (ou les réactifs susceptibles de réagir pour former les particules appropriées) aptes à capter et retenir le strontium contenu dans l'effluent liquide, ce premier réacteur se présentant sous forme d'un réacteur en verre d'un volume utile de 2,5 litres ; le premier réacteur 3 étant muni d'un dispositif d'agitation 5 et de chicanes métalliques et d'une surverse (non représentée, destinée à évacuer le trop-plein le cas échéant) ;
- un deuxième réacteur 7 assurant la fonction de décanteur destiné à accueillir la suspension formée dans le premier réacteur, cette suspension comprenant les particules solides ayant complexé le strontium, ce deuxième réacteur étant un réacteur du type cylindro-conique présentant un volume utile de 13 litres, l'alimentation en suspension étant réalisée en son centre ;
- une première conduite 9 connectée au premier réacteur 3 qui assure l'alimentation de ce dernier en effluent aqueux comprenant l'élément strontium à éliminer, l'acheminement étant facilité via une pompe péristaltique (non représentée) ;
- une deuxième conduite 11 connectée au premier réacteur 3 qui assure l'alimentation de ce dernier en réactifs aptes à réagir pour former des particules solides aptes à capter et retenir le strontium et/ou en particules solides déjà formées (ces particules étant en l'occurrence ici des particules solides de sulfate de baryum), l'acheminement étant facilité via une pompe péristaltique (non représentée) ;
- une troisième conduite 13 qui relie le premier réacteur 3 au deuxième réacteur 7 et qui assure l'acheminement, sous forme d'un flux de surverse, de la suspension comprenant les particules solides ayant capté et retenu le strontium du premier réacteur vers le second réacteur ;
- une quatrième conduite 15 qui relie le second réacteur 7 au premier réacteur 3 et qui assure l'acheminement d'une partie de la phase solide décantée dans le deuxième réacteur vers le premier réacteur (dénommée également boucle de recyclage) ;
- une cinquième conduite 17 qui permet le soutirage de la phase liquide 16 décontaminée ;
- une sixième conduite 19 qui permet le soutirage de la phase solide 18 n'étant pas réacheminée vers le premier réacteur.

L'efficacité de traitement est évaluée par un paramètre : le facteur de décontamination noté FD. Dans le cadre de la décontamination en strontium, le FD correspond au rapport de la concentration en strontium dans le flux d'entrée (flux passant par la première conduite 9) et de cette même concentration dans le flux sortant du premier réacteur (flux passant par la troisième conduite 13). Le FD peut être défini également comme le rapport de la concentration en strontium dans le flux d'entrée (flux passant par la première conduite 9) et de cette même concentration dans le flux sortant du second réacteur (flux sortant par la conduite 17).

Dans le dispositif présenté ci-dessus, l'effluent introduit dans le réacteur 3 par la conduite 9 est composé de 0,5 mol/L de nitrate de sodium, de 0,1 mol/L de sulfate de sodium et de 1,14.10⁻⁴ mol/L de nitrate de strontium. L'élément à éliminer est le strontium. Le débit d'effluent dans la conduite 9 est ajusté à 14L/h. Le réactif introduit par la conduite 11 est une solution de nitrate de baryum à 0,29 mol/L et le débit dans la conduite 11 est de 1L/h.

Les ions sulfates introduits *via* la conduite 9 vont réagir avec les ions baryum introduits *via* la conduite 11 pour former des particules solides de sulfate de baryum qui vont capter et retenir le strontium.

Si la boucle de recyclage n'est pas activée (débit nul dans la conduite 15), après 40 minutes de fonctionnement, le FD mesuré en sortie du réacteur 3 par la conduite 13 est égal à 60±5 et le FD mesuré en sortie du réacteur 7 par la conduite 17 est égal à 100±10.

Si maintenant le débit de suspension dans la conduite 15 est d'environ 1200 g/h, le FD dans la phase liquide dans la conduite 13 est augmenté d'un facteur d'environ 8 soit environ 500±150. Le FD dans la phase liquide de la conduite 17 est lui d'environ 500±50.

L'amélioration de la décontamination est liée à l'existence de la boucle de recyclage et, d'un point de vue chimique, entre autres, à la diminution de la vitesse de croissance cristalline de BaSO₄ découlant de l'existence de cette boucle, la diminution de vitesse étant liée à une quantité et une surface de cristaux de BaSO₄ supérieures à celles existant dans le cas où il n'y a pas de boucle de recyclage. Il a été constaté que la diminution de vitesse de croissance cristalline de BaSO₄ favorise la décontamination en strontium.

### EXEMPLE 2

Dans cet exemple, on utilise un dispositif identique à celui de l'exemple 1.

L'effluent introduit dans le réacteur 3 par la conduite 9 est composé de 0,5 mol/L de nitrate de sodium, de 0,1 mol/L de sulfate de sodium et de 1,14. 10⁻⁴ mol/L de nitrate de strontium. L'élément à éliminer est le strontium. Le débit d'effluent dans la conduite 9 est ajusté à 14L/h. Le réactif introduit par la conduite 11 est une solution de nitrate de baryum à 0,29 mol/L et le débit dans la conduite 11 est de 0,5 L/h, soit divisé par 2 par rapport à l'exemple 1. Cela a pour conséquence que le débit de production de sulfate de baryum dans le réacteur 3 est divisé par 2. Il en résulte que la production horaire de boue est divisée par 2.

Si la boucle de recyclage n'est pas activée (débit nul dans la conduite 15), le FD mesuré en sortie du réacteur 3 par la conduite 13 est égal à 20±3 et le FD mesuré en sortie du réacteur 7 par la conduite 17 est égal à 30±3.

Si maintenant le débit de suspension dans la conduite 15 est d'environ 3600 g/h, le FD dans la phase liquide dans la conduite 13 est augmenté d'un facteur 5 soit environ 100±10. Le FD dans la phase liquide de la conduite 17 est lui d'environ 150±10. On rappelle que, pour obtenir la même efficacité sans utiliser la boucle de recyclage, il faut mettre en oeuvre deux fois plus de réactifs et donc produire deux fois plus de déchets.

## Revendications

1. Procédé continu de décontamination d'un effluent liquide radioactif comprenant un ou plusieurs éléments chimiques radioactifs à éliminer comprenant les étapes suivantes:
- une étape de mise en contact, dans un premier réacteur, dudit effluent liquide radioactif avec des particules solides aptes à capter et retenir le ou lesdits éléments chimiques radioactifs à éliminer, moyennant quoi l'on obtient une suspension de particules solides contenant le ou lesdits éléments chimiques radioactifs à éliminer ;
- une étape de décantation dans un deuxième réacteur de ladite suspension, moyennant quoi l'on obtient une phase solide comprenant les particules solides contenant le ou lesdits éléments chimiques radioactifs à éliminer et une phase liquide appauvrie ou dénuée en ledit ou lesdits éléments chimiques radioactifs à éliminer ;
- une étape de séparation de ladite phase solide et de ladite phase liquide ;
**caractérisé en ce qu'**une partie de ladite phase solide obtenue à l'issue de l'étape de décantation est réinjectée dans le premier réacteur pour la mise en oeuvre d'une étape de mise en contact telle que définie ci-dessus.

2. Procédé de décontamination selon la revendication 1, dans lequel les particules solides aptes à capter et retenir le ou lesdits éléments chimiques à éliminer dans l'étape de mise en contact sont de deux typez :
- un partie est issue d'un flux continu dans le premier réacteur de particules non usées (à savoir n'ayant pas subi d'étape de mise en contact avec l'effluent liquide) et/ou de réactifs aptes à engendrer par réaction chimique dans ledit premier réacteur lesdites particules; et
- l'autre partie est issue de l'étape de réinjection telle que définie à la revendication 1.

3. Procédé de décontamination selon la revendication 1 ou 2, dans lequel les éléments chimiques radioactifs sont choisis parmi le strontium, le ruthénium, le césium, des émetteurs α, tels que l'américium, le plutonium et l'uranium, et les mélanges de ceux-ci.

4. Procédé de décontamination selon la revendication 3, dans lequel, lorsque l'élément chimique radioactif à éliminer est le strontium, les particules solides sont des particules solides de sulfate de baryum, de carbonate de baryum, de carbonate de calcium, d'hydroxyde de fer, de phosphate de calcium, de phosphate de fer, de dioxyde de manganèse et/ou de dioxyde de titane.

5. Procédé de décontamination selon la revendication 3, dans lequel, lorsque l'élément chimique radioactif à éliminer est le ruthénium ou un émetteur α, tel que l'américium, le plutonium et l'uranium, les particules solides sont des particules solides d'hydroxydes de fer et de cuivre.

6. Procédé de décontamination selon la revendication 3, dans lequel, lorsque l'élément chimique radioactif à éliminer est le césium, les particules solides sont des particules solides de ferrocyanure de nickel et de cobalt, de tétraphénylborate et/ou des particules présentant une structure zéolithique.

## Claims

1. Continuous process for decontaminating a radioactive liquid effluent comprising one or more radioactive chemical elements to be removed that comprises the following steps:
- a step of bringing said radioactive liquid effluent into contact, in a first reactor, with solid particles capable of capturing and retaining said radioactive chemical element(s) to be removed, by means of which a suspension of solid particles containing said radioactive chemical element(s) to be removed is obtained;
- a step of settling said suspension, in a second reactor, by means of which a solid phase is obtained that comprises the solid particles containing said radioactive chemical element(s) to be removed and a liquid phase depleted or devoid of said radioactive chemical element(s) to be removed;
- a step of separating said solid phase and said liquid phase;
**characterized in that** a portion of said solid phase obtained at the end of the settling step is reinjected into the first reactor for the implementation of a contacting step as defined above.

2. Decontamination process according to Claim 1, in which the solid particles capable of capturing and retaining said chemical element(s) to be removed in the contacting step are of two types:
- one portion originates from a continuous flow into the first reactor of unused particles (namely that have not undergone a contacting step with the liquid effluent) and/or of reactants capable of generating, by chemical reaction in said first reactor, said particles; and
- the other portion results from the reinjection step as defined in Claim 1.

3. Decontamination process according to Claim 1 or 2, in which the radioactive chemical elements are chosen from strontium, ruthenium, caesium, α emitters, such as americium, plutonium and uranium, and mixtures thereof.

4. Decontamination process according to Claim 3, in which, when the radioactive chemical element to be removed is strontium, the solid particles are solid particles of barium sulphate, of barium carbonate, of calcium carbonate, of iron hydroxide, of calcium phosphate, of iron phosphate, of manganese dioxide and/or of titanium dioxide.

5. Decontamination process according to Claim 3, in which, when the radioactive chemical element to be removed is ruthenium or an α emitter, such as americium, plutonium and uranium, the solid particles are solid particles of iron and copper hydroxides.

6. Decontamination process according to Claim 3, in which, when the radioactive chemical element to be removed is caesium, the solid particles are solid particles of nickel ferrocyamide and cobalt ferrocyanide, of tetraphenylborate and/or particles having a zeolite structure.

## Patentansprüche

1. Kontinuierliches Verfahren zur Dekontaminierung von radioaktivem Flüssigabfall, der ein oder mehrere zu entfernende radioaktive chemische Elemente umfasst, wobei das Verfahren die folgenden Stufen umfasst:
- eine Stufe des Inkontaktbringens des radioaktiven Flüssigabfalls in einem ersten Reaktor mit Feststoffteilchen, die fähig sind, das bzw. die zu entfernende/n radioaktive/n chemische/n Element/e einzufangen und festzuhalten, wodurch eine Suspension von Feststoffteilchen, die das bzw. die zu entfernende/n radioaktive/n chemische/n Element/e enthalten, erhalten wird;
- eine Stufe der Dekantation der Suspension in einem zweiten Reaktor, wodurch eine feste Phase, die die festen Teilchen umfasst, die das bzw. die zu entfernende/n radioaktive/n chemische/n Element/e enthalten, und eine flüssige Phase, die an dem bzw. den zu entfernenden radioaktiven chemischen Element/en verarmt oder frei von diesem bzw. diesen ist, erhalten werden;
- eine Stufe der Trennung der festen Phase und der flüssigen Phase;
**dadurch gekennzeichnet, dass** ein Teil der festen Phase, die am Ende der Stufe der Dekantation erhalten wird, in den ersten Reaktor zur Durchführung einer Stufe des Inkontaktbringens, wie sie im Vorhergehenden angegeben ist, rückgeführt wird.

2. Verfahren zur Dekontaminierung nach Anspruch 1, wobei die Feststoffteilchen, die fähig sind, das bzw. die zu entfernende/n chemische/n Element/e in der Stufe des Inkontaktbringens einzufangen und festzuhalten, zwei Arten von Teilchen sind:
- ein Teil stammt von einem kontinuierlichen Fluss von nichtverwendeten Teilchen (d.h. Teilchen, die die Stufe des Inkontaktbringens mit Flüssigabfall nicht durchlaufen haben) in dem ersten Reaktor und/oder Reagenzien, die fähig sind, die Teilchen durch eine chemische Reaktion in dem ersten Reaktor zu erzeugen; und
- der andere Teil stammt aus der Stufe der Rückführung, wie sie in Anspruch 1 angegeben ist.

3. Verfahren zur Dekontaminierung nach Anspruch 1 oder 2, wobei die radioaktiven chemischen Elemente aus Strontium, Ruthenium, Cäsium, α-Strahlern wie Americium, Plutonium und Uran und Gemischen hiervon ausgewählt sind.

4. Verfahren zur Dekontaminierung nach Anspruch 3, wobei, wenn das zu entfernende radioaktive chemische Element Strontium ist, die Feststoffteilchen Feststoffteilchen aus Bariumsulfat, Bariumcarbonat, Calciumcarbonat, Eisenhydroxid, Calciumphosphat, Eisenphosphat, Mangandioxid und/oder Titandioxid sind.

5. Verfahren zur Dekontaminierung nach Anspruch 3, wobei, wenn das zu entfernende radioaktive chemische Element Ruthenium oder ein α-Strahler wie Americium, Plutonium und Uran ist, die Feststoffteilchen Feststoffteilchen aus Essen- und Kupferhydroxid sind.

6. Verfahren zur Dekontaminierung nach Anspruch 3, wobei, wenn das zu entfernende radioaktive chemische Element Cäsium ist, die Feststoffteilchen Feststoffteilchen aus Nickel- und Cobaltferrocyanid, Tetraphenylborat und/oder Teilchen, die eine Zeolithstruktur aufweisen, sind.
